# EUROPÄISCHE PATENTSCHRIFT

(11) **EP 3 548 759 B1**
(45) Veröffentlichungstag und Bekanntmachung des Hinweises auf die Patenterteilung: **09.03.2022**
(21) Anmeldenummer: 17837858.4
(22) Anmeldetag: 04.12.2017
(51) Int. Cl.: F16C 43/02, F16C 35/02, F16C 33/08, F16C 33/20

(54) **VERFAHREN ZUR HERSTELLUNG EINES GELENKS UND GELENK**
METHOD OF MANUFACTURING A HINGE AND HINGE
PROCÉDÉ DE FABRICATION D'UNE ARTICULATION ET ARTICULATION

(30) Priorität: 02.12.2016 DE 102016123297
(43) Veröffentlichungstag der Anmeldung: 09.10.2019
(73) Patentinhaber: Lohr technologies GmbH, 42579 Heiligenhaus (DE)
(72) Erfinder: STUMPP, Lukas, 33098 Paderborn (DE); LOHR, Stefan, 32105 Bad Salzuflen (DE)
(74) Vertreter: Schneiders & Behrendt Bochum
(86) Internationale Anmeldenummer: PCT/EP2017/081344
(87) Internationale Veröffentlichungsnummer: WO 2018/100204

(56) Entgegenhaltungen:
- DE-A1-102006 031 616
- DE-B- 1 286 822
- DE-B1- 2 733 669
- US-A- 6 098 248
- US-A1- 4 930 184

## Beschreibung

Die Erfindung betrifft ein Verfahren zur Herstellung eines Gelenks und ein nach dem Verfahren hergestelltes Gelenk, welches zwei gegeneinander gelenkig verstellbare Gelenkarme umfasst.

Derartige Gelenke finden bevorzugt Verwendung in der Automobilindustrie, um beispielsweise Autotüren, Motorhauben oder Heckklappen gelenkig mit der Karosserie zu verbinden. Aus haptischen Gründen werden hier definierte und gleichbleibende Reibungskoeffizienten gefordert. Mit der Wahl des Reibungskoeffizienten zwischen den Gelenkteilen lässt sich ein besonders wertiges haptisches Erlebnis beim Öffnen und Schließen von beispielsweise Autotüren erreichen.

Die DE 1 286 822 B betrifft eine Dichtungsanordnung für ein Zapfengelenk. Aus US 4 930 184 A1 ist ein Gelenk zur Verwendung an einem Schwimmsteg insbesondere zur Verbindung eines Fingerstegs oder Zwischenstegs bekannt.

Der Erfindung liegt die Aufgabe zu Grunde, ein Herstellungsverfahren und ein Gelenk zu schaffen, welches einfach und genau herzustellen ist, einen definierten und gleich bleibenden Reibungskoeffizienten und eine hohe Langlebigkeit aufweist.

Gelöst wird diese Aufgabe durch ein Verfahren mit den Merkmalen des Anspruchs 1 sowie durch ein Gelenk mit den Merkmalen des Anspruchs 4.

Vorteilhafte Ausgestaltungen sind jeweils Gegenstand der abhängigen Ansprüche. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Dadurch dass jeder Gelenkarm jeweils ein Gleitlagerelement aufnimmt und eine Gleitlagerbuchse zwischen den Gleitlagerelementen angeordnet ist, resultiert ein einfaches und langlebiges Gelenk. Dies wird insbesondere dadurch erreicht, dass beide Gelenkarme durch zwei Gleitlagerelemente miteinander verbunden sind. Mit der geeigneten Wahl des Materials der Gleitlagerbuchse lässt sich der Reibkoeffizient zwischen den Gleitlagerelementen und der Gleitlagerbuchse gezielt einstellen. Ein Gelenk besteht vorzugsweise aus zwei Gleitlagerelementen und einem zwischen den Gleitlagerelementen verorteten Lebensdauerschmierstoff. Der Lebensdauerschmierstoff ist als Festkörper ausgeführt. Mit der geeigneten Wahl des Materials der Gleitlagerelemente und des Lebensdauerschmierstoffs lässt sich der Reibkoeffizient im Gelenk gezielt einstellen.

Gemäß einer vorteilhaften Ausgestaltung der Erfindung ist vorgesehen, dass eines der Gleitlagerelemente, vorzugsweise mittig der Gelenkachse, eine zentrierende Ausformung und das andere Gleitlagerelement, vorzugsweise mittig der Gelenkachse, eine die zentrierende Ausformung aufnehmende Aufnahmekontur aufweist. Diese Ausgestaltung hat zum einen den Vorteil, dass ein sehr genau arbeitendes Gelenk gegeben ist, zum anderen kann ein derartig ausgestattetes Gelenk sehr gut die auftretenden oder die geforderten Scherkräfte quer zur Gelenksachse aufnehmen.

Eine vorteilhafte Ausführung ist, dass die zentrierende Ausformung zylindrisch ausgebildet ist. Eine zylindrische Ausführung der zentrierenden Ausformung erleichtert die Bewegung der Gelenkarme bzw. der Gleitlagerelemente zueinander, da diese hierdurch optimal zueinander ausgerichtet sind.

Eine bevorzugte Ausführung sieht vor, dass die Gleitlagerelemente an den Außenseiten mittig konisch ausgeformt sind und einen umlaufenden Giebel bilden. Mit der konischen Ausgestaltung in der Mitte der Außenseiten können die Gleitlagerelemente besonders gut und sicher von den Gelenkarmen aufgenommen werden. Die Bildung eines umlaufenden Giebels bietet zusätzlichen Halt für die Gleitlagerelemente in den Gelenkarmen, wodurch die Stabilität des Gelenks erhöht wird. Zudem lassen sich die Gleitlagerelemente besonders leicht in einen automatisierten Handlingsprozess integrieren. Außerdem dienen die Giebel als Positionierhilfe der Gleitlagerelemente in einer Gussform zur Fertigung der Gelenkarme. Besonders bei der Herstellung der Gelenkarme durch ein Druckgussverfahren ist es erforderlich die Gleitlagerelement in Position zu halten, um eine hohe Genauigkeit in dem Gelenk zu erreichen.

Eine bevorzugte Ausführung sieht vor, dass die Gleitlagerelemente an den Außenseiten zylindrisch ausgeformt sind. Mit der zylindrischen Ausgestaltung der Außenseiten können die Gleitlagerelemente sehr einfach, aber präzise hergestellt werden. Ferner ermöglicht die zylindrische Ausformung eine einfache Integration in vorhandene Scharnierkonzepte oder ermöglicht eine einfache Neuentwicklung eines Scharniers.

Besonders vorteilhaft ist die Weiterbildung, dass die Gleitlagerelemente und/oder die Gleitlagerbuchse eine umlaufende Labyrinthdichtung aufweisen. Eine solche umlaufende Labyrinthdichtung verhindert das Eindringen von Schmutz in die Spalte zwischen den Gleitlagerelementen und der Gleitlagerbuchse.

Weiter vorteilhaft ist die Ausgestaltung, dass die Gleitlagerbuchse aus Kunststoff gebildet sind. Eine aus Kunststoff gebildete Gleitlagerbuchse lässt sich sehr einfach herstellen und montieren. Außerdem bieten Kunststoffe zahlreiche unterschiedliche Reibkoeffizienten, so dass sich der gewünschte oder geforderte Reibkoeffizient hierdurch einfach auswählen lässt.

Eine vorteilhafte Ausführungsform der Erfindung sieht vor, dass die Gleitlagerbuchse eine Lebensdauerschmierung ist. Die Verwendung einer Lebensdauerschmierung bietet eine einfache Möglichkeit ein langlebiges und zuverlässig arbeitendes Gelenk zu schaffen.

Eine vorteilhafte Ausführungsform der Erfindung sieht vor, dass in ein Gleitlagerelement eine Lebensdauerschmierung implementiert ist. Die Verwendung einer Lebensdauerschmierung bietet eine einfache Möglichkeit ein langlebiges und zuverlässig arbeitendes Gelenk zu schaffen.

Eine Ausgestaltung des Gelenks sieht vor, dass zwischen den Gleitlagerelementen ein Lebensdauerschmierstoff eingebracht wird. Dieser Lebensdauerschmierstoff besteht aus einem definierten Kunststoff. Ein aus Kunststoff gebildeter Lebensdauerschmierstoff lässt sich sehr einfach herstellen und montieren. Ferner lässt sich über werkstoffliche Parametrisierung ein gezielter Reibkoeffizient des Gleitlagerelements einstellen.

Eine vorteilhafte Ausführung ist, dass die Gleitlagerelemente eine Gleitbeschichtung aufweisen. Diese bietet den Vorteil, dass die Gleitlagerelemente unabhängig von ihrem Vollmaterial eine flüssige und nahezu verschleißfreie Bewegung zueinander ermöglichen. Mit einem vorher festgelegten definierten Reibkoeffizienten kann eine definierte Bewegung der Gelenkteile zueinander erreicht werden, wodurch sich die jeweils gewünschte Haptik erreichen lässt.

Eine vorteilhafte Ausführung ist, dass die Gleitlagerelemente eine Gleitbeschichtung aufweisen. Diese bietet den Vorteil den Verschleiß im Gelenk selbst auf ein Mindestmaß zu reduzieren.

Gemäß einer vorteilhaften Ausgestaltung der Erfindung ist vorgesehen, dass die Gleitbeschichtung als aufgedampfte Beschichtung, insbesondere PVD-Beschichtung, ausgebildet ist. Eine derartige Beschichtung bietet besondere Vorteile für eine dauerhafte Bewegung der Gleitlagerelemente zueinander, da die Beschichtung eine besonders geringe Reibung und damit einen geringen Verschleiß aufweist. Außerdem lässt sich über die Beschichtung ein definierter Reibkoeffizient einstellen, über den ein definierter Verschleiß einstellbar ist, wodurch sich die Lebensdauer eines Gelenkes sehr genau auf die gewünschten Vorgaben einstellen lässt.

Besonders vorteilhaft ist die Weiterbildung, dass die Gleitlagerelemente aus Edelstahl gebildet sind. Derartig ausgestaltete Gleitlagerelemente bieten eine langlebige und stabile Lagerung der Gelenkarme zueinander. Zudem bieten die Gleitlagerelemente einen erhöhten Korrosionsschutz gegen Umwelteinflüsse und ergeben ein langlebiges Gelenk. Ein weiterer Vorteil von Edelstahl ist die definierte Wärmeübertragung. Bei der Herstellung der Gelenkarme in einem Gussverfahren führt die definierte Wärmeleitung der Gleitlagerelemente zu einer kontrollierten Wärmeabgabe an die Gleitlagerbuchse. Bei ausreichend großer Dimensionierung setzt die Abkühlung der Schmelze im Gussverfahren rechtzeitig ein, um die Gleitlagerbuchse nicht durch Überhitzung zu zerstören. Durch Ausnutzung der Wärmeleitung von Edelstahl lässt sich für den Druckgussprozess ein gezielter Zustand einstellen.

Eine bevorzugte Ausführung sieht vor, dass die Gelenkarme aus Aluminium gebildet sind. Die Gelenkarme aus Aluminium herzustellen hat einen enormen Vorteil für den Fahrzeugbau, da hierdurch deutlich Gewicht eingespart werden kann gegenüber konventionell aus Stahl hergestellten Gelenkarmen. Die geringere Schmelztemperatur von Aluminium gegenüber Stahl hat zudem den Vorteil, dass das Material der Gleitlagerbuchse, insbesondere die Lebensdauerschmierung, nicht durch Überhitzung zerstört wird.

Eine bevorzugte Ausführung sieht vor, dass die Gelenkarme aus Kunststoff gebildet sind. Die Gelenkarme aus Kunststoff herzustellen hat einen enormen Gewichtsvorteil für den Fahrzeugbau und andere Anwendungsgebiete, da hierdurch deutlich Gewicht eingespart werden kann gegenüber konventionell aus Stahl hergestellten Gelenkarmen. Die geringere Schmelztemperatur von Kunststoff gegenüber Stahl hat zudem den Vorteil, dass das Material der Gleitlagerbuchse nicht durch Überhitzung zerstört wird.

Die Erfindung umfasst ein Verfahren zur Herstellung eines Gelenks gemäß obiger und nachfolgender Beschreibung, wobei zunächst
a) zwischen die zwei Gleitlagerelemente die Gleitlagerbuchse eingefügt wird,
b) die Gleitlagerelemente dann zur Herstellung der Gelenkarme von Schmelze umflossen werden, wobei die Temperatur der Schmelze derart geführt ist, dass die Gleitlagerelemente sich erwärmen und dadurch die zwischen diesen angeordnete Gleitlagerbuchse kontrolliert erwärmen,
c) wobei die Erwärmung der Gleitlagerbuchse dazu führt, dass das Spiel im Gelenk und der Reibkoeffizient kontrolliert eingestellt werden.

Mittels eines derartigen Verfahrens lassen sich recht einfach sehr genau arbeitende Gelenke herstellen. Die Montage der Gleitlagerelemente mit der Gleitlagerbuchse ist dank zunächst vorhandener Toleranzen recht einfach zu bewerkstelligen. Die Gleitlagerelemente und die Gleitlagerbuchse lassen sich durch einen Fügeschritt mit einer definierten Kraft zusammenfügen, ohne dass diese Kraftausübung zu einer Zerstörung der Gleitlagerbuchse führt. Die Montage der Gleitlagerbuchse mit dem Lebensdauerschmierstoff als Festkörper ist aufgrund definierter Toleranzen einfach in der Umsetzung. Nach dieser Montage werden die Gleitlagerelemente zusammen mit der Gleitlagerbuchse in eine Gussform eingesetzt, in welcher die Gelenkarme gegossen werden. Das Umfließen der Gleitlagerelemente mit der Schmelze in der Gussform erwärmt die Gleitlagerelemente, wodurch die zwischen den Gleitlagerelementen angeordnete Gleitlagerbuchse ebenfalls erwärmt wird. Die Erwärmung der Gleitlagerbuchse führt vorteilhafterweise zum Ausgleich vorhandener Toleranzen in dem so hergestellten Gelenk. Für die Herstellung der Gelenkarme aus Aluminium am besten geeignet ist das Druckgussverfahren. Bei Gelenkarmen aus Kunststoff eignet sich besonders das Spritzgussverfahren. Durch die Erwärmung der Gleitlagerbuchse können definierte Parameter des Gelenks gezielt eingestellt werden. Durch die Erwärmung der Gleitlagerbuchse können zudem Toleranzen im Gelenk ausgeglichen werden und das Lagerspiel und damit die Lagerreibung lassen sich gezielt einstellen.

Eine vorteilhafte Ausführung des Verfahrens ist, dass die Gleitlagerbuchse zwischen den Gleitlagerelementen durch die Erwärmung expandiert wird und sich das Material der Gleitlagerbuchse an die Gleitlagerelemente anlegt. Mit der Expandierung der Gleitlagerbuchse legt sich das Material an die erwärmten Gleitlagerelemente an, ohne mit diesen zu verkleben. Hierdurch ist es möglich auf besonders einfache Art und Weise ein besonders präzises Gelenk herzustellen. Außerdem ist die Montage der Gleitlagerbuchse und der Gleitlagerelemente vor der Expandierung aufgrund definierter und ausreichend vorhandener Toleranzen einfach.

Besonders vorteilhaft an dem Verfahren ist die Weiterbildung, dass durch eine gezielte Temperaturführung die Gleitlagerbuchse an einer definierten Stelle einen bestimmten Temperaturwert nicht überschreitet. Die Führung der Temperatur in der Schmelze wird vorteilhafter Weise so ausgelegt, dass die Gleitlagerbuchse sich nur bis zu einer definierten Maximaltemperatur erhitzt, welche die Funktion und Form des Gleitlagerelements nicht beeinträchtigt. Z.B. können die Gleitlagerelemente aus Edelstahl bestehen, die mit Aluminium umgossen werden, um die Gelenkarme an den Gleitlagerelementen auszubilden und sich mit diesen formschlüssig zu verbinden. Beim Gießvorgang befindet sich zwischen den Gleitlagerelementen eine Gleitlagerbuchse aus Lebensdauerschmierstoff als Festkörper, welcher z.B. aus PTFE oder einem anderen verschleiß- und temperaturbeständigen Kunststoff besteht. Der Gießvorgang ist so durchzuführen, dass sich die Gleitlagerbuchse durch die Wärmeleitung aus der Schmelze nicht über einen maximalen Temperaturwert hinaus erwärmt. Dies kann insbesondere durch die Dauer des Gießvorgangs, die Kühlung der Gießform sowie durch die Massen und Abmessungen der Gleitlagerelemente gesteuert werden. Andererseits ist eine gewisse Erwärmung, wie oben erläutert, notwendig, damit das Kunststoffmaterial der Gleitlagerbuchse sich passgenau an die benachbarten Gleitlagerelemente anlegt und dabei Toleranzen ausgleicht.

Besonders vorteilhaft an dem Verfahren ist die Weiterbildung, dass die Erwärmung der Gleitlagerbuchse bis zu einer definierten Maximaltemperatur, vorzugsweise maximal 315 °C, erfolgt. Die Führung der Temperatur in der Schmelze wird vorteilhafter Weise so ausgelegt, dass die Gleitlagerbuchse sich nur bis zu einer Maximaltemperatur erhitzt, welche die Funktion und Form der Gleitlagerbuchse nicht beeinträchtigt. Z.B. können die Gleitlagerelemente aus Edelstahl bestehen, die mit Aluminium umgossen werden, um die Gelenkarme an den Gleitlagerelementen auszubilden und mit diesen fest (formschlüssig) zu verbinden. Beim Gießvorgang befindet sich zwischen den Gleitlagerelementen die Gleitlagerbuchse, die z.B. aus PTFE oder einem anderen verschleiß- und temperaturbeständigen Kunststoff besteht. Der Gießvorgang ist so durchzuführen, dass sich die Gleitlagerbuchse durch die Wärmeleitung aus der Schmelze über die Gleitlagerelemente nicht über einen maximalen Temperaturwert hinaus erwärmt. Dies kann insbesondere durch die Dauer des Gießvorgangs, die Kühlung der Gießform sowie durch die Massen der Gleitlagerelemente gesteuert werden. Andererseits ist eine gewisse Erwärmung, wie oben erläutert, von Vorteil, damit das Kunststoffmaterial der Gleitlagerbuchse beginnt zu fließen und sich passgenau an die benachbarten Gleitlagerelemente anlegt und dabei Toleranzen ausgleicht.

Weitere Merkmale, Einzelheiten und Vorteile der Erfindung ergeben sich aufgrund der nachfolgenden Beschreibung sowie anhand der Zeichnungen. Ausführungsbeispiele der Erfindung sind in den folgenden Zeichnungen schematisch dargestellt und werden nachfolgend näher beschrieben. Es zeigen:
- Figur 1:: schematische Schnittdarstellung eines erfindungsgemäßen Gelenks;
- Figur 2:: schematische Schnittdarstellung eines erfindungsgemäßen Gelenks in abgewandelter Ausgestaltung;
- Figur 3:: schematische Detaildarstellung eines erfindungsgemäßen Gelenks

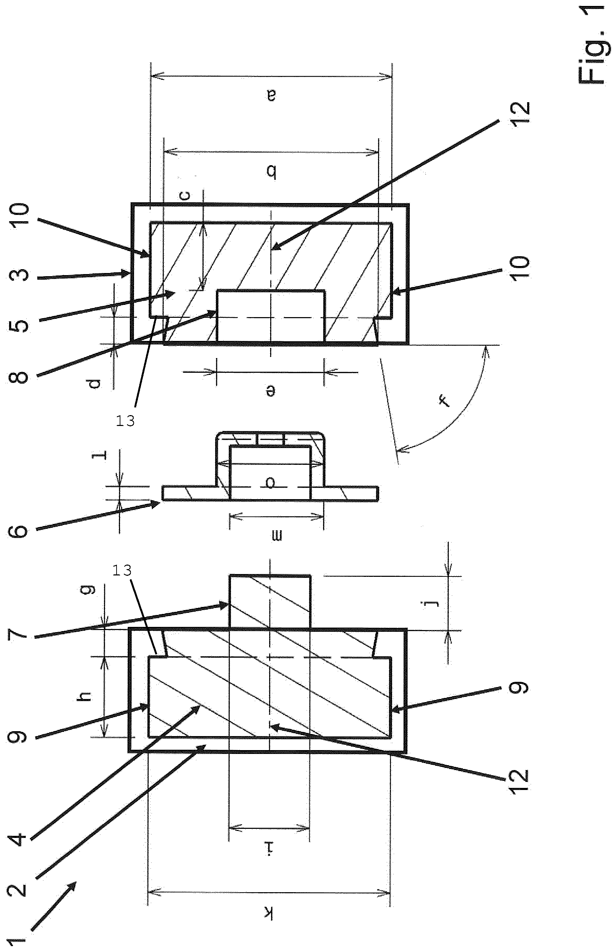

In Figur 1 mit dem Bezugszeichen 1 bezeichnet ist ein erfindungsgemäßes Gelenk schematisch dargestellt. Die Darstellung gemäß Figur 1 zeigt eine Schnittdarstellung. Gezeigt sind die zwei gegeneinander gelenkig verstellbaren Gelenkarme 2, 3 des Gelenks 1. Jeder der Gelenkarme 2, 3 nimmt ein Gleitlagerelement 4, 5 auf. Zwischen den so aufgenommenen Gleitlagerelementen 4, 5 ist eine Gleitlagerbuchse 6 angeordnet. Aus Gründen der Übersichtlichkeit ist die Darstellung gemäß Figur 1 als Explosionszeichnung ausgeführt, sodass die Gleitlagerelemente 4, 5 und die Gleitlagerbuchse 6 entlang der Gelenksachse 12 auseinandergezogen dargestellt sind. Im vollständig montierten Zustand liegt die Gleitlagerbuchse 6 an den Gleitlagerelementen 4, 5 an. Das in der Zeichnung links angeordnete Gleitlagerelement 4 weist eine zentrierende Ausformung 7 auf, die im montierten Zustand in einer Aufnahmekontur 8 des in der Zeichnung rechts angeordneten Gleitlagerelementes 5 aufgenommen ist. Die zentrierende Ausformung 7 ist zylindrisch ausgebildet, wobei der gebildete Zylinder konzentrisch zu der Gelenksachse 12 angeordnet ist. Die ebenfalls konzentrisch zur Gelenksachse 12 angeordnete zylindrische Aufnahmekontur 8 ermöglicht eine sichere Lagerung der Ausformung 7 auf der Gelenksachse 12. Die vorzugsweise aus Kunststoff gebildete Gleitlagerbuchse 6 weist eine Kontur auf, sodass sie zwischen den Gleitlagerelementen 4, 5 angeordnet werden kann. Dies ist von besonderem Vorteil, wenn die Gleitlagerbuchse 6 eine Lebensdauerschmierung ist, denn hierdurch ist gewährleistet, dass keine erhöhte Reibung zwischen Gleitlagerelementen 4, 5 entsteht. Eine solche Reibung lässt sich auch dadurch verhindern, dass die Gleitlagerelemente 4, 5 eine Gleitbeschichtung aufweisen.

Diese Gleitbeschichtung wird vorzugsweise durch physikalische Dampfphasenabscheidung (PVD) aufgedampft. Wie zu erkennen ist, sind die Außenseiten 9, 10 der Gleitlagerelemente 4, 5 im hier gezeigten Ausführungsbeispiel ebenfalls zylindrisch ausgeformt. Die Gleitlagerelemente 4, 5 bilden jedoch einen Vorsprung 13, sodass die Gelenkarme 2, 3 die Gleitlagerelemente 4, 5 sicher aufnehmen können. Während die Gleitlagerelemente 4, 5 aus Edelstahl gebildet sind, sind die Gelenkarme 2, 3 vorzugsweise aus Aluminium gebildet. Dies hat besondere Vorteile bei der Herstellung des Gelenks 1 mittels des erfindungsgemäßen Verfahrens. Denn bei der Herstellung des Gelenks 1 wird zwischen die zwei Gleitlagerelemente 4, 5 die Gleitlagerbuchse 6 eingefügt. Anschließend werden die Gleitlagerelemente 4, 5 zusammen mit der Gleitlagerbuchse 6 in eine Gussform eingesetzt. Durch Umfließen der Gleitlagerelemente 4, 5 mit Schmelze in der Gussform werden die Gelenkarme 2, 3 hergestellt. Die Temperatur der Schmelze wird bei der Herstellung der Gelenkarme 2, 3 so geführt, dass die Gleitlagerelemente 4, 5 sich erwärmen und dadurch die zwischen den Gleitlagerelementen 4, 5 angeordnete Gleitlagerbuchse 6 erwärmt wird. Die Erwärmung der Gleitlagerbuchse 6 führt dazu, dass Toleranzen im Gelenk 1 ausgeglichen werden. Dies wird insbesondere dadurch gewährleistet, dass die Gelenkarme 2, 3, die Gleitlagerelemente 4, 5 sowie die Gleitlagerbuchse 6 bis zum Erkalten der Materialien durch die Gussform in Position gehalten werden. Besonders gut werden die Toleranzen ausgeglichen, wenn das Material der Gleitlagerbuchse 6 durch die Erwärmung expandiert wird und sich an die Gleitlagerelemente 4, 5 anlegt. Die Erwärmung der aus PTFE gefertigten Gleitlagerbuchse 6 sollte bis maximal ca. 315 °C erfolgen, um die Funktion und Form der Gleitlagerbuchse 6 nicht zu beeinträchtigen. Die Schmelztemperatur von PFTE liegt bei 327 °C. Von diesem Wert sollte ein ausreichender Sicherheitsabstand eingehalten werden.

Insbesondere durch die Gleitlagerelemente 4, 5 aus Edelstahl kann sichergestellt werden, dass der Aluminiumguss für die Gelenkarme 2, 3 die Gleitlagerbuchse 6 nicht zu stark erwärmt. Der Edelstahl erwärmt sich hinreichend langsam und hält die Temperatur über einen längeren Zeitraum. Hierdurch kann die Gleitlagerbuchse 6 in kontrollierter Art und Weise erwärmt werden. Die hierdurch eingeleitete Expandierung führt zu einer Aufdickung des Kunststoffes, wodurch das Spiel des Gelenks reduziert wird. Je nach Form und Größe der Gleitlagerelemente 4, 5 bzw. der Gelenkarme 2, 3 kann es erforderlich sein die Gussform zusätzlich von außen aktiv zu kühlen, um eine Überhitzung der Gleitlagerelemente 4, 5, insbesondere der Gleitlagerbuchse 6, zu verhindern.

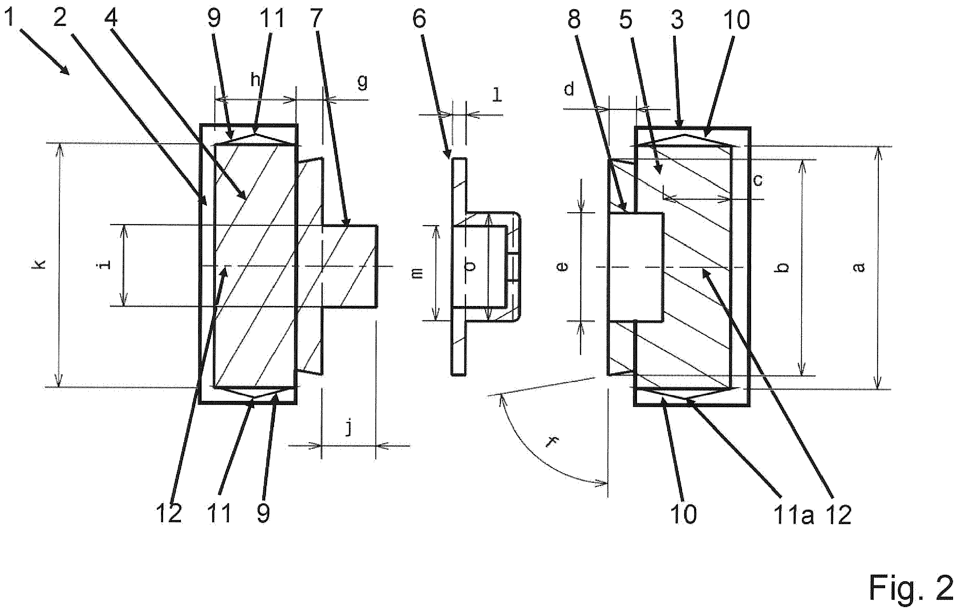

Die Figur 2 zeigt rein schematisch dargestellt eine Schnittdarstellung durch ein erfindungsgemäßes Gelenk 1 in einer leicht gegenüber Figur 1 abgewandelten Ausführungsform. Im Unterschied zu Figur 1 weisen die Gleitlagerelemente 4, 5 konisch ausgeformte Außenseiten 9, 10 auf, die jeweils einen umlaufenden Giebel 11, 11a bilden. Hierdurch können die Gleitlagerelemente 4, 5 besonders sicher und stabil von den Gelenkarmen 2, 3 aufgenommen werden. Durch die derart ausgestalteten Außenseiten 9, 10 können die Gelenkarme 2, 3 schmaler ausgeführt werden und müssen den Vorsprung 13 (Figur 1) nicht umschließen, um einen sicheren Halt der Gleitlagerelemente 4, 5 zu gewährleisten.

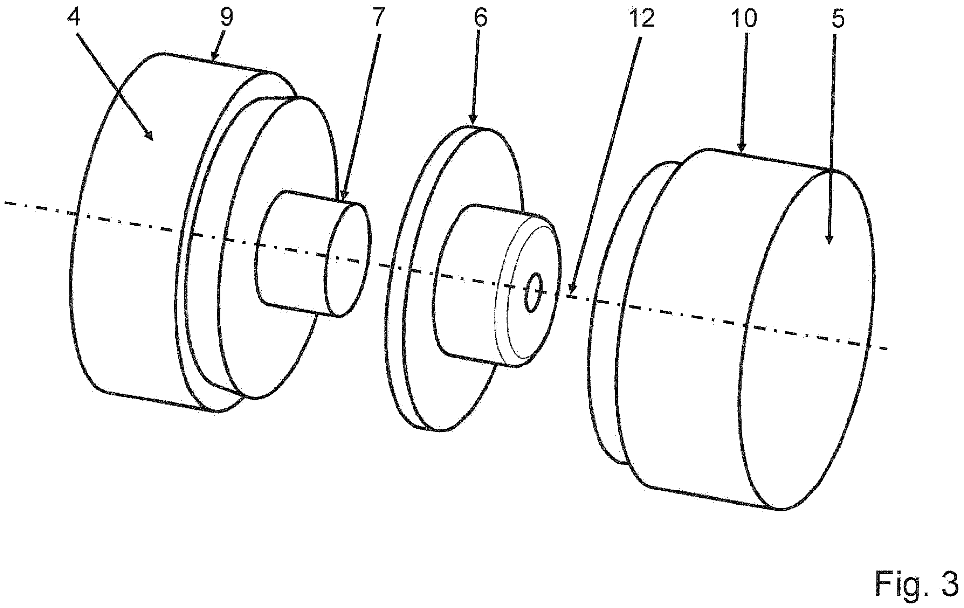

In Figur 3 ist eine perspektivische Ansicht auf die Gleitlagerelemente 4, 5 nach Ausführung gemäß Figur 1 gezeigt zwischen diesen Gleitlagerelementen 4, 5 befindet sich auf der Gelenksachse 12 angeordnet, die zwischen den Gleitlagerelementen 4, 5 vorgesehene Gleitlagerbuchse 6.

- Bezugszeichenliste -

### Bezugszeichenliste

- 1: Gelenk
- 2: Gelenkarm A
- 3: Gelenkarm B
- 4: Gleitlagerelement A
- 5: Gleitlagerelement B
- 6: Gleitlagerbuchse
- 7: Zentrierende Ausformung
- 8: Aufnahmekontur
- 9: Außenseite A
- 10: Außenseite B
- 11 11a,: Giebel
- 12: Gelenkachse
- 13: Vorsprung
- a: Durchmesser von Gleitlagerelement B
- b: Durchmesser von Vorsprung an Gleitlagerelement B
- c: Tiefe von Gleitlagerelement B
- d: Tiefe von Vorsprung an Gleitlagerelement B
- e: Durchmesser von Aufnahmekontur
- f: Öffnungswinkel von Vorsprung
- g: Tiefe von Vorsprung an Gleitlagerelement A
- h: Tiefe von Gleitlagerelement A
- i: Durchmesser von Ausformung
- j: Länge von Ausformung
- k: Durchmesser von Gleitlagerelement A
- l: Dicke von Gleitlagerbuchse
- m: Durchmesser von Gleitlagerbuchsenaufnahme
- o: Durchmesser von Gleitlagerbuchsenausformung

## Patentansprüche

1. Verfahren zur Herstellung eines Gelenks (1) mit zwei gegeneinander gelenkig verstellbaren Gelenkarmen (2, 3), wobei jeder Gelenkarm (2, 3) jeweils ein Gleitlagerelement (4, 5) aufnimmt und eine Gleitlagerbuchse (6) zwischen den Gleitlagerelementen (4, 5) angeordnet ist, wobei
a) zwischen die zwei Gleitlagerelemente (4, 5) die Gleitlagerbuchse (6) eingefügt wird,
**dadurch gekennzeichnet, dass**
b) die Gleitlagerelemente (4, 5) zur Herstellung der Gelenkarme (2, 3) anschließend von Schmelze umflossen werden, wobei die Temperatur der Schmelze derart geführt ist, dass die Gleitlagerelemente (4, 5) sich erwärmen und dadurch die zwischen diesen angeordnete Gleitlagerbuchse (6) kontrolliert erwärmen,
c) wobei die Erwärmung der Gleitlagerbuchse (6) dazu führt, dass das Spiel im Gelenk (1) und der Reibkoeffizient kontrolliert eingestellt werden.

2. Verfahren nach Anspruch 1, **dadurch gekennzeichnet, dass** die Gleitlagerbuchse (6) durch die Erwärmung expandiert und sich das Material der Gleitlagerbuchse (6) an die Gleitlagerelemente (4,5) anlegt.

3. Verfahren nach Anspruch 1 oder 2, **dadurch gekennzeichnet, dass** die Erwärmung der Gleitlagerbuchse (6) bis zu einer definierten Maximaltemperatur erfolgt.

4. Gelenk (1) mit zwei gegeneinander gelenkig verstellbaren Gelenkarmen (2, 3), wobei jeder Gelenkarm (2, 3) jeweils ein Gleitlagerelement (4, 5) aufnimmt und eine Gleitlagerbuchse (6) zwischen den Gleitlagerelementen (4, 5) angeordnet ist,
**dadurch gekennzeichnet,**
**dass** das Gelenk (1) nach einem Verfahren gemäß einem der Ansprüche 1 bis 3 hergestellt ist.

5. Gelenk (1) nach Anspruch 4, **dadurch gekennzeichnet, dass** eines der Gleitlagerelemente (4) eine zentrierende Ausformung (7) und das andere Gleitlagerelement (5) eine die zentrierende Ausformung (7) aufnehmende Aufnahmekontur (8) aufweist.

6. Gelenk (1) nach Anspruch 5, **dadurch gekennzeichnet, dass** die zentrierende Ausformung (7) zylindrisch ausgebildet ist.

7. Gelenk (1) nach einem der Ansprüche 4 bis 6, **dadurch gekennzeichnet, dass** die Gleitlagerelemente (4, 5) an den Außenseiten (9, 10) mittig konisch ausgeformt sind und einen umlaufenden Giebel (11, 11a) bilden.

8. Gelenk (1) nach einem der Ansprüche 4 bis 6, **dadurch gekennzeichnet, dass** die Gleitlagerelemente (4, 5) an den Außenseiten (9, 10) zylindrisch ausgeformt sind.

9. Gelenk (1) nach einem der Ansprüche 4 bis 8, **dadurch gekennzeichnet, dass** die Gleitlagerelemente (4, 5) und/oder die Gleitlagerbuchse (6) eine umlaufende Labyrinthdichtung aufweisen.

10. Gelenk (1) nach einem der Ansprüche 4 bis 9, **dadurch gekennzeichnet, dass** die Gleitlagerbuchse (6) aus Kunststoff gebildet sind.

11. Gelenk (1) nach einem der Ansprüche 4 bis 10, **dadurch gekennzeichnet, dass** die Gleitlagerbuchse (6) eine Lebensdauerschmierung ist.

12. Gelenk (1) nach einem der Ansprüche 4 bis 11, **dadurch gekennzeichnet, dass** die Gleitlagerelemente (4, 5) eine Gleitbeschichtung aufweisen.

13. Gelenk (1) nach Anspruch 12, **dadurch gekennzeichnet, dass** die Gleitbeschichtung als aufgedampfte Beschichtung, insbesondere PVD-Beschichtung, ausgebildet ist.

14. Gelenk (1) nach einem der Ansprüche 4 bis 13, **dadurch gekennzeichnet, dass** die Gleitlagerelemente (4, 5) aus Edelstahl gebildet sind.

15. Gelenk (1) nach einem der Ansprüche 4 bis 14, **dadurch gekennzeichnet, dass** die Gelenkarme (2, 3) aus Aluminium gebildet sind.

16. Gelenk (1) nach einem der Ansprüche 4 bis 14, **dadurch gekennzeichnet, dass** die Gelenkarme (2, 3) aus Kunststoff gebildet sind.

## Claims

1. A method for manufacturing a hinge (1) having two hinge arms (2, 3) that can be displaced in an articulated manner relative to each other, wherein each hinge arm (2, 3) receives respectively one sliding bearing element (4, 5) and a plain bearing bush (6) is arranged between the sliding bearing elements (4, 5), wherein
a) the plain bearing bush (6) is inserted between the two sliding bearing elements (4, 5),
**characterized in that**
b) melt then flows around the sliding bearing elements (4, 5) for the manufacture of the hinge arms (4, 5), wherein the temperature of the melt is guided such that the sliding bearing elements (4, 5) heat up and thereby heat the plain bearing bush (6) arranged between these in a controlled manner,
c) wherein the heating of the plain bearing bush (6) leads to the clearance in the hinge (1) and the coefficient of friction being set in a controlled manner.

2. The method according to claim 1, **characterized in that** the plain bearing bush (6) expands by the heating and the material of the plain bearing bush (6) bears against the sliding bearing elements (4, 5).

3. The method according to claim 1 or 2, **characterized in that** the plain bearing bush (6) is heated up to a defined maximum temperature.

4. A hinge (1) having two hinge arms (2, 3) that can be displaced in an articulated manner relative to each other, wherein each hinge arm (2, 3) receives respectively one sliding bearing element (4, 5) and a plain bearing bush (6) is arranged between the sliding bearing elements (4, 5)
**characterized in**
**that** the hinge (1) is manufactured by a method according to one of claims 1 to 3.

5. The hinge (1) according to claim 4, **characterized in that** one of the sliding bearing elements (4) has a centering formation (7) and the other sliding bearing element (5) has a receiving contour (8) receiving the centering formation (7).

6. The hinge (1) according to claim 5, **characterized in that** the centering formation (7) is configured cylindrical.

7. The hinge (1) according to one of claims 4 to 6, **characterized in that** the sliding bearing elements (4, 5) are conically formed in the center on the outer sides (9, 10) and form a circumferential gable (11, 11a).

8. The hinge (1) according to one of claims 4 to 6, **characterized in that** the sliding bearing elements are formed cylindrically (4, 5) on the outer sides (9, 10).

9. The hinge (1) according to one of claims 4 to 8, **characterized in that** the sliding bearing elements (4, 5) and/or the plain bearing bush (6) have a circumferential labyrinth seal.

10. The hinge (1) according to one of claims 4 to 9, **characterized in that** the plain bearing bush (6) is formed from plastic.

11. The hinge (1) according to one of claims 4 to 10, **characterized in that** the plain bearing bush (6) is a lifetime lubrication.

12. The hinge (1) according to one of claims 4 to 11, **characterized in that** the sliding bearing elements (4, 5) have a slide coating.

13. The hinge (1) according to claim 12, **characterized in that** the slide coating is configured as vapor-deposited coating, in particular PVD coating.

14. The hinge (1) according to one of claims 4 to 13, **characterized in that** the sliding bearing elements (4, 5) are formed of stainless steel.

15. The hinge (1) according to one of claims 4 to 14, **characterized in that** the hinge arms (2, 3) are formed of aluminum.

16. The hinge (1) according to one of claims 4 to 14, **characterized in that** the hinge arms (2, 3) are formed of plastic.

## Revendications

1. Procédé de fabrication d'une articulation (1) avec deux bras d'articulation (2, 3) pouvant être ajustés l'un à l'encontre de l'autre de manière articulée, dans lequel chaque bras d'articulation (2, 3) loge respectivement un élément de palier lisse (4, 5) et un coussinet lisse (6) est disposée entre les éléments de palier lisse (4, 5), dans lequel
a) le coussinet lisse (6) est inséré entre les deux éléments de palier lisse (4, 5),
**caractérisé en ce que**
b) les éléments de palier lisse (4, 5) sont entourés ensuite de matière fondue pour fabriquer les bras d'articulation (2, 3), dans lequel la température de la matière fondue est pilotée de telle manière que les éléments de palier lisse (4, 5) se réchauffent et réchauffent ainsi de manière contrôlée le coussinet lisse (6) disposé entre ceux-ci,
c) dans lequel le réchauffage du coussinet lisse (6) a pour effet que le jeu dans l'articulation (1) et le coefficient de frottement sont réglés de manière contrôlée.

2. Procédé selon la revendication 1, **caractérisé en ce que** le coussinet lisse (6) s'expanse du fait du réchauffage et que le matériau du coussinet lisse (6) se place sur les éléments de palier lisse (4, 5).

3. Procédé selon la revendication 1 ou 2, **caractérisé en ce que** le réchauffage du coussinet lisse (6) est effectué jusqu'à une température maximale définie.

4. Articulation (1) avec deux bras d'articulation (2, 3) pouvant être ajustés l'un à l'encontre de l'autre de manière articulée, dans laquelle chaque bras d'articulation (2, 3) loge respectivement un élément de palier lisse (4, 5) et un coussinet lisse (6) est disposé entre les éléments de palier lisse (4, 5),
**caractérisée en ce que**
l'articulation (1) est fabriquée selon un procédé selon l'une quelconque des revendications 1 à 3.

5. Articulation (1) selon la revendication 4, **caractérisée en ce qu'**un des éléments de palier lisse (4) présente une déformation de centrage (7) et l'autre élément de palier lisse (5) présente un contour de logement (8) logeant la déformation de centrage (7).

6. Articulation (1) selon la revendication 5, **caractérisée en ce que** la déformation de centrage (7) est réalisée de manière cylindrique.

7. Articulation (1) selon l'une quelconque des revendications 4 à 6, **caractérisée en ce que** les éléments de palier lisse (4, 5) sont formées de manière conique au centre sur les côtés extérieurs (9, 10) et forment un pignon périphérique (11, 11a).

8. Articulation (1) selon l'une quelconque des revendications 4 à 6, **caractérisée en ce que** les éléments de palier lisse (4, 5) sont formés de manière cylindrique sur les côtés extérieurs (9, 10).

9. Articulation (1) selon l'une quelconque des revendications 4 à 8, **caractérisé en ce que** les éléments de palier lisse (4, 5) et/ou le coussinet lisse (6) présentent un joint d'étanchéité à labyrinthe périphérique.

10. Articulation (1) selon l'une quelconque des revendications 4 à 9, **caractérisée en ce que** le coussinet lisse (6) est formé à partir de matière plastique.

11. Articulation (1) selon l'une quelconque des revendications 4 à 10, **caractérisée en ce que** le coussinet lisse (6) est une lubrification à vie.

12. Articulation (1) selon l'une quelconque des revendications 4 à 11, **caractérisée en ce que** les éléments de palier lisse (4, 5) présentent un revêtement glissant.

13. Articulation (1) selon la revendication 12, **caractérisée en ce que** le revêtement glissant est réalisé en tant que revêtement déposé en phase vapeur, en particulier un revêtement PVD (à dépôt physique en phase vapeur).

14. Articulation (1) selon l'une quelconque des revendications 4 à 13, **caractérisée en ce que** les éléments de palier lisse (4, 5) sont formés à partir d'acier inoxydable.

15. Articulation (1) selon l'une quelconque des revendications 4 à 14, **caractérisée en ce que** les bras d'articulation (2, 3) sont formés à partir d'aluminium.

16. Articulation (1) selon l'une quelconque des revendications 4 à 14, **caractérisée en ce que** les bras d'articulation (2, 3) sont formés à partir de matière plastique.
